# DEMANDE DE BREVET EUROPEEN

(11) **EP 0 772 280 A1**
(43) Date de publication de la demande: **07.05.1997**
(21) Numéro de dépôt: 96410109.1
(22) Date de dépôt: 25.10.1996
(51) Int. Cl.: H02M 1/10, H02M 3/07

(54) **Circuit d'alimentation redressée bi-tension**

(30) Priorité: 30.10.1995 FR 9513040
(71) Demandeur: SGS-THOMSON MICROELECTRONICS S.A., 94250 Gentilly (FR)
(72) Inventeur: Moreau, Jean-Michel, 38100 Grenoble (FR)
(74) Mandataire: de Beaumont, Michel

(57) **Abrégé**

L'invention concerne un circuit d'alimentation redressée bi-tension comprenant, aux bornes d'un pont redresseur double alternance (BR), au moins un condensateur (C) associé à un chemin de charge à conduction unidirectionnelle d'une première polarité (401) et à un chemin de décharge à conduction unidirectionnelle d'une deuxième polarité (402) de façon que le condensateur soit chargé et déchargé de façon distincte. Des commutateurs (405, 406) suppriment l'action de l'un au moins des chemins à conduction unidirectionnelle de sorte que le moyen de stockage soit chargé et déchargé selon la même configuration. Les commutateurs sont actionnés quand la tension alternative d'entrée est basse.

## Description

La présente invention concerne un circuit d'alimentation redressée et plus particulièrement un tel circuit adapté à recevoir une tension alternative de valeur élevée ou une tension alternative de valeur faible, et qui fonctionne en circuit correcteur de facteur de puissance au moins pour la tension d'alimentation de valeur élevée.

A titre d'exemple, la tension alternative de valeur élevée peut être une tension du secteur de 220 à 240 volts et la tension de valeur faible peut être une tension du secteur de 100 à 117 volts.

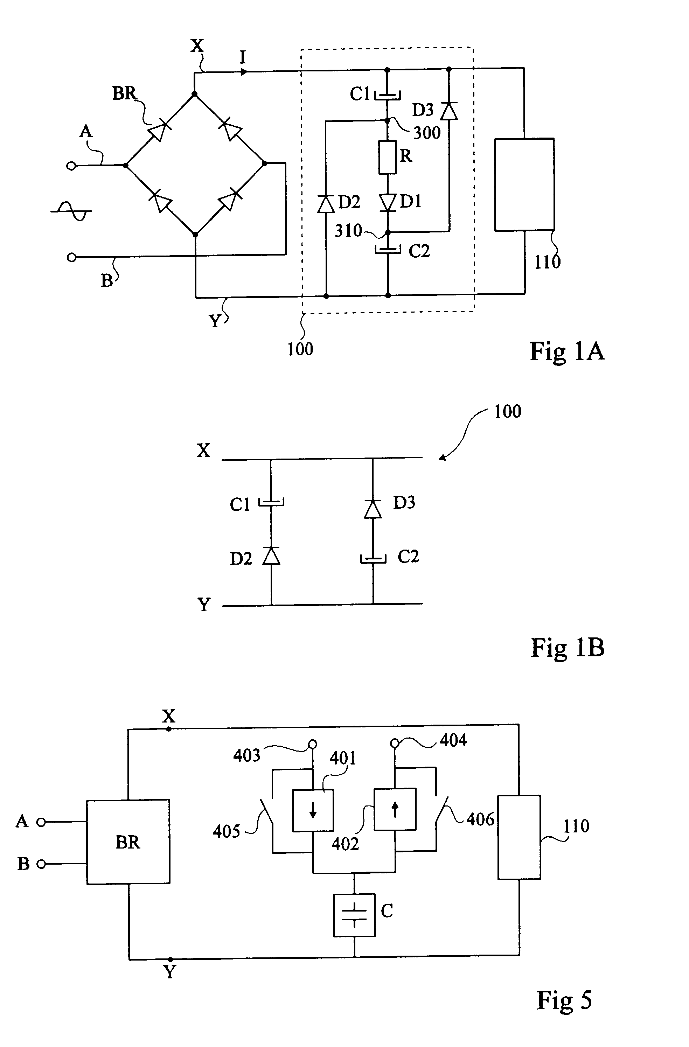

La figure 1A représente un exemple de circuit de fourniture de tension d'alimentation redressée à correcteur de facteur de puissance. Ce circuit comprend un pont redresseur BR dont des bornes d'entrée A et B sont connectées à la tension du secteur et dont les bornes de sortie X et Y sont connectées à un circuit de stockage du type à correction de facteur de puissance 100 et à un bloc 110. Le bloc 110 comporte une charge associée à un circuit de régulation tel qu'un circuit à découpage et sera simplement appelé ci-après charge.

Le circuit de stockage à correction de facteur de puissance comporte entre les bornes X et Y un condensateur C1 en série avec une diode D1 et un condensateur C2, la diode D1 étant connectée dans un sens propre à permettre la charge des condensateurs C1 et C2. On prévoit généralement une résistance R en série pour limiter les pics de courant lors de la mise sous tension et des commutations. La borne Y est connectée au point de connexion 300 du condensateur C1 et de la diode D1 par l'intermédiaire d'une diode D2. La borne X est connectée au point de connexion 310 de la diode D1 et du condensateur C2 par l'intermédiaire d'une diode D3. Les diodes D2 et D3 sont connectées dans un sens propre à permettre la décharge des condensateurs C1 et C2 vers la charge 110. De façon générale, les condensateurs C1, C2 sont des condensateurs de même capacité. Il est également connu de remplacer certaines au moins des diodes D1, D2, D3 par des diodes à avalanche.

La figure 1B représente le schéma de fonctionnement du circuit 100 quand les condensateurs C1 et C2 sont dans le mode de décharge. On voit que ces deux condensateurs sont alors placés en parallèle, alors que, dans le mode de charge, ils sont chargés en série.

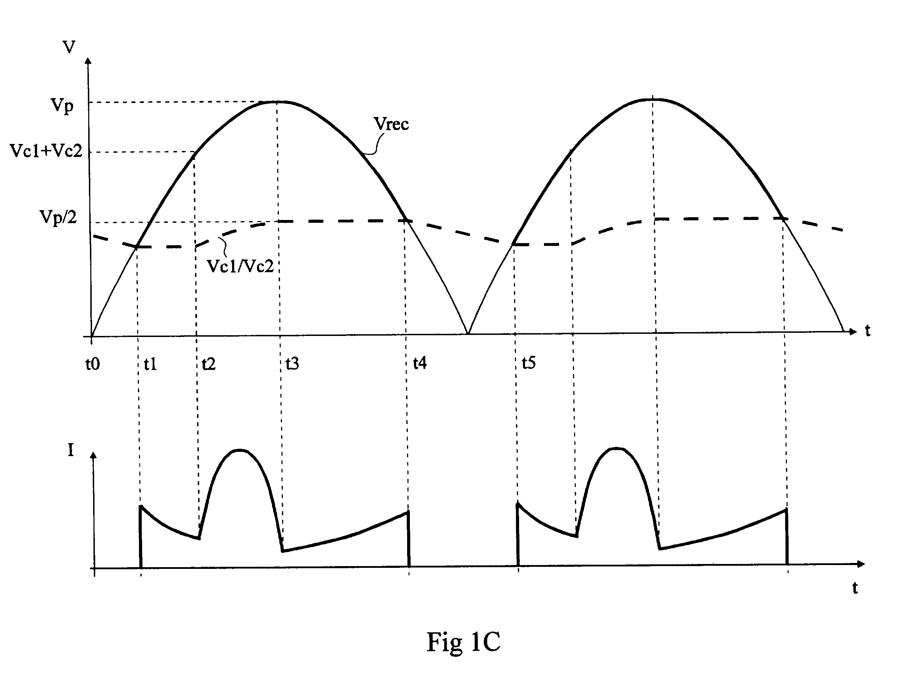

Le fonctionnement de ce circuit va être expliqué en relation avec la figure 1C dans laquelle sont représentées la tension V entre les bornes X et Y, et les tensions VC1 et VC2 aux bornes de chacun des condensateurs C1, C2 supposés de valeur égale, ainsi que le courant I (redressé) extrait du secteur.

Pendant la période t0<t<t1, les condensateurs C1 et C2 se déchargent en parallèle. Toute la puissance requise par la charge 110 est fournie par ces condensateurs.

A l'instant t1, la tension redressée Vrec devient égale au niveau de tension instantanée VC1, VC2 respectivement présent aux bornes des condensateurs C1 et C2. Les diodes D2 et D3 se polarisent en inverse. Les condensateurs C1 et C2 sont alors flottants et leur charge sensiblement constante. En conséquence, la charge est directement alimentée à partir du secteur redressé. Il en résulte une augmentation rapide du courant extrait du secteur. Pendant la période t1<t<t2, la tension redressée augmente et le courant extrait du secteur diminue. La diminution du courant pour une augmentation de tension est due au fait que l'on suppose la demande de puissance de la charge constante. Pendant cette durée, les diodes D1, D2, D3 restent polarisées en inverse et les condensateurs C1 et C2 restent flottants.

A l'instant t2, la tension redressée est sensiblement égale à la tension VC1+VC2 stockée sur les condensateurs C1 et C2 et la diode D1 se polarise en direct. Pendant la période t2<t<t3, l'alimentation charge les condensateurs connectés en série par l'intermédiaire de la diode D1 et en même temps assure l'alimentation de la charge. Les diodes D2 et D3 restent polarisées en inverse. Les deux condensateurs se chargent à Vp/2.

A l'instant t3, la tension redressée atteint sa valeur de crête Vp et la diode D1 se repolarise en inverse. Pendant la période t3<t<t4, la tension redressée diminue et le courant extrait du secteur augmente si la demande de puissance de la charge reste constante. Pendant cette durée, les condensateurs C1 et C2 restent chargés à Vp/2.

A l'instant t4, la tension redressée atteint la moitié Vp/2 de sa valeur de crête. Les diodes D2 et D3 se polarisent en direct et les condensateurs C1 et C2 commencent à se décharger en parallèle dans la configuration illustrée en figure 1B. Le courant extrait du secteur chute alors à 0. Pendant la période t4<t<t5, la valeur de tension redressée reste inférieure à celle stockée sur chacun des condensateurs C1 et C2. L'alimentation est alors fournie à la charge par les condensateurs.

A partir de l'instant t5, on se retrouve dans la configuration décrite à l'instant t1.

Un avantage d'un tel circuit dit à correction de facteur de puissance est que, par rapport à un circuit où un condensateur serait directement connecté aux bornes du pont redresseur BR, la durée pendant laquelle un courant est extrait du secteur est agrandie, comme le montre la figure 1C. Ainsi, le taux d'harmoniques renvoyé sur le secteur est réduit.

Un inconvénient d'un tel circuit est qu'il augmente le courant dans la charge pendant les phases d'alimentation à tension réduite. Dans le cas où l'on utilise une alimentation à découpage, on augmente donc le courant qui circule dans le commutateur de découpage, ce qui conduit à augmenter la dimension de ce commutateur. Ceci entraîne une augmentation du coût du commutateur et du transformateur habituellement présent dans un circuit à découpage. C'est toutefois le prix à payer pour une amélioration du facteur de puissance et cela reste acceptable quand on souhaite fournir une alimentation destinée à fonctionner sur une tension de secteur donnée, par exemple 220 volts.

Toutefois, si l'on veut fournir un redresseur bi-tension, pouvant par exemple recevoir comme cela a été indiqué précédemment soit une tension de 220 volts, soit une tension de 110 volts, cet inconvénient devient rédhibitoire quand on passe à une alimentation secteur de 110 volts. En effet, alors, si l'on veut maintenir une puissance constante dans la charge, le courant double à nouveau. De tels systèmes ne sont pas adaptés à fonctionner à tension variable.

Ainsi, un objet de la présente invention est de prévoir une alimentation de tension redressée adaptée à fonctionner pour diverses tensions d'alimentation et fonctionnant dans un mode de correction de facteur de puissance au moins pour la tension d'alimentation la plus élevée, sans nécessiter un surdimensionnement du commutateur d'une alimentation à découpage dans le cas où l'on fonctionne à tension faible.

Pour atteindre cet objet, la présente invention prévoit de façon générale un circuit d'alimentation redressée bi-tension comprenant, aux bornes d'un pont redresseur double alternance, au moins un moyen de stockage associé à un chemin de charge comprenant des premiers moyens de conduction unidirectionnelle d'une première polarité et à un chemin de décharge comprenant des deuxièmes moyens de conduction unidirectionnelle d'une deuxième polarité de façon que le moyen de stockage soit chargé et déchargé de façon distincte. Des moyens de commutation permettent de supprimer l'action de l'un au moins des premiers et deuxièmes moyens de conduction unidirectionnelle de sorte que le moyen de stockage soit chargé et déchargé selon la même configuration.

Selon un mode de réalisation de la présente invention, le circuit est adapté à fonctionner avec une tension alternative d'entrée élevée ou avec une tension alternative d'entrée basse, et les moyens de commutation sont actionnés quand la tension alternative d'entrée est basse.

Selon un aspect de la présente invention, le circuit d'alimentation redressée bi-tension comprend, aux bornes d'un pont redresseur double alternance, au moins deux condensateurs de stockage associés à des diodes de redressement de façon que les condensateurs soient chargés en série et déchargés en parallèle, et les moyens de commutation suppriment l'action des diodes de sorte que les deux condensateurs soient chargés et déchargés selon la même configuration.

Selon un mode de réalisation de la présente invention, le circuit est adapté à fonctionner avec une tension alternative d'entrée élevée ou avec une tension alternative d'entrée basse, et les moyens de commutation sont actionnés quand la tension alternative d'entrée est basse.

Selon un mode de réalisation de la présente invention, le circuit comprend, entre la borne de sortie haute et la borne de sortie basse d'un redresseur double alternance, la connexion en série d'un premier condensateur dont la première borne est connectée à ladite sortie haute, d'une résistance, d'une première diode, et d'un deuxième condensateur dont la première borne est reliée à ladite sortie basse ; une deuxième diode est connectée entre la deuxième borne du premier condensateur et la sortie basse ; une troisième diode est connectée entre la deuxième borne du deuxième condensateur et la sortie haute.

Selon un mode de réalisation de la présente invention, les moyens de commutation comprennent un commutateur connecté aux bornes de la liaison série de ladite résistance et de ladite première diode.

Selon un mode de réalisation de la présente invention, les moyens de commutation comprennent un premier commutateur connecté entre la deuxième borne du premier condensateur et une borne d'alimentation alternative du pont redresseur, et un deuxième commutateur connecté entre la deuxième borne du deuxième condensateur et la borne d'alimentation alternative redressée.

Selon un mode de réalisation de la présente invention, les moyens de commutation comprennent un premier commutateur connecté entre la deuxième borne du premier condensateur et la sortie basse et un deuxième commutateur connecté entre la deuxième borne du deuxième condensateur et la sortie haute.

La présente invention s'applique notamment à des redresseurs associés à des appareils domestiques tels que des lave-vaisselle, des lave-linge, des fours à micro-ondes, des aspirateurs, des réfrigérateurs, des congélateurs, etc...

Ces objets, caractéristiques, avantages ainsi que d'autres de la présente invention seront exposés plus en détail dans la description suivante de modes de réalisation particuliers faite, à titre non-limitatif, en relation avec les figures jointes parmi lesquelles :
la figure 1A, décrite précédemment, représente un circuit redresseur à correction de facteur de puissance selon l'art antérieur ;
la figure 1B représente la configuration du circuit de correction de facteur de puissance dans le mode de décharge ;
la figure 1C représente diverses courbes destinées à expliquer le fonctionnement du circuit de la figure 1A ;
la figure 2A représente un premier mode de réalisation d'un circuit bi-tension selon la présente invention ;
la figure 2B représente un schéma équivalent du circuit de la figure 2A dans son mode de fonctionnement à tension basse ;
la figure 3A représente un deuxième mode de réalisation d'un circuit bi-tension selon la présente invention ;
la figure 3B représente un schéma équivalent du circuit de la figure 3A dans son mode de fonctionnement à tension basse ;
la figure 4A représente un troisième mode de réalisation d'un circuit bi-tension selon la présente invention ;
la figure 4B représente un schéma équivalent du circuit de la figure 4A dans son mode de fonctionnement à tension basse ; et
la figure 5 est un schéma généralisé de la présente invention.

La présente invention prévoit de façon générale d'utiliser un circuit de stockage à correction de facteur de puissance tel que celui de la figure 1A et de ne plus faire fonctionner le circuit dans le mode de correction de facteur de puissance quand ce circuit est alimenté en basse tension. Pour cela, la présente invention prévoit au moins un commutateur destiné à modifier la structure du circuit, ce ou ces commutateurs étant fermés dans le mode de fonctionnement en basse tension. Il en résulte qu'il n'est alors plus nécessaire de prévoir un commutateur de découpage surdimensionné derrière le circuit de stockage selon la présente invention quand ce circuit est alimenté en basse tension.

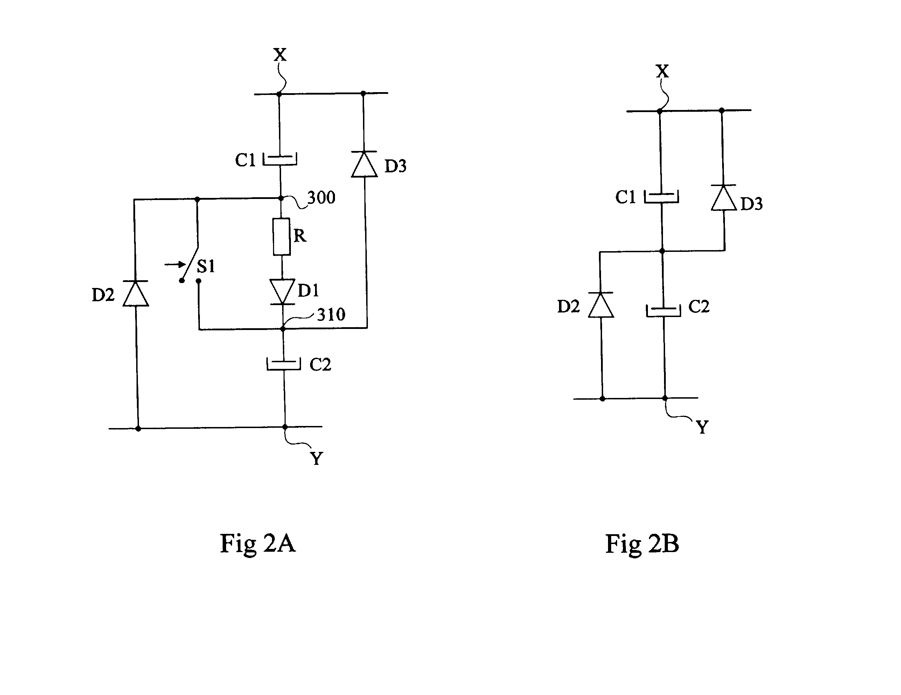

La figure 2A représente un premier mode de réalisation de la présente invention dans lequel le circuit 100 de la figure 1A a été modifié pour comprendre un commutateur S1 en parallèle sur la connexion en série de la résistance R (si elle est prévue) et de la diode D1.

Quand le commutateur S1 est ouvert, le système est identique à celui de la figure 1A.

Quand le commutateur S1 est fermé, ce qui est fait quand l'alimentation est à basse tension, par exemple 110 volts, le circuit devient celui de la figure 2B. Les diodes D2 et D3 n'ont alors plus aucun rôle et, dans un schéma équivalent, le circuit comprend seulement entre les bornes X et Y deux condensateurs C1 et C2 en série. Le circuit n'a alors plus de fonction de correction de facteur de puissance et fonctionne simplement en circuit de redressement de crête. Les condensateurs C1 et C2 étant en série et non plus en parallèle, l'ensemble de ces condensateurs alimente la charge par la tension crête du secteur et il n'est pas nécessaire de surdimensionner le commutateur d'une alimentation à découpage inclus dans la charge 110 de la figure 1A.

Un inconvénient du circuit de la figure 2 est que, comme on garde les mêmes condensateurs C1 et C2 que ceux qui sont prévus pour alimenter la charge dans un cas de fonctionnement à haute tension (220 volts), et que ces condensateurs ont la même valeur C, la capacité équivalente de l'ensemble de ces condensateurs sera C/2. En conséquence l'énergie maximale stockée peut ne pas être suffisante pour maintenir l'alimentation de la charge pendant les périodes séparant deux recharges des condensateurs. Les modes de réalisation suivants de la présente invention remédient à cet inconvénient.

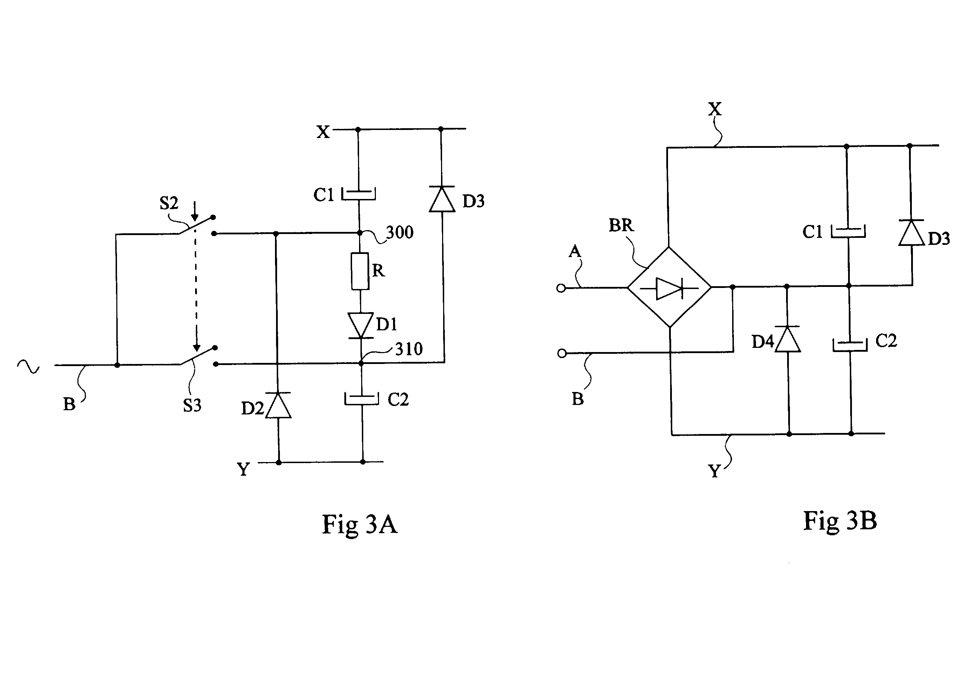

Un autre mode de réalisation de la présente invention est illustré en figure 3A. Il consiste à prévoir deux commutateurs S2 et S3 commandés simultanément. Le commutateur S2 est placé entre la borne B de l'alimentation alternative et le point de connexion 300 du condensateur C1 et de la résistance R. Le commutateur S3 est placé entre la borne B et le point de connexion 310 de la diode D1 et du condensateur C2.

Quand les commutateurs S2 et S3 sont ouverts, le circuit est le même que celui de la figure 1A.

Quand les commutateurs S2 et S3 sont fermés, on obtient le circuit illustré en figure 3B qui présente l'avantage que chacun des condensateurs C2 et C3 est chargé sous la tension de crête du secteur et que la quantité d'énergie stockée dans chacun de ces condensateurs sera donc le quadruple de celle du cas de la figure 2B. On notera toutefois qu'un inconvénient de ce mode de réalisation est que chacun des condensateurs est chargé une alternance sur deux ce qui peut présenter également un inconvénient en ce qui concerne le stockage d'énergie dans ces condensateurs.

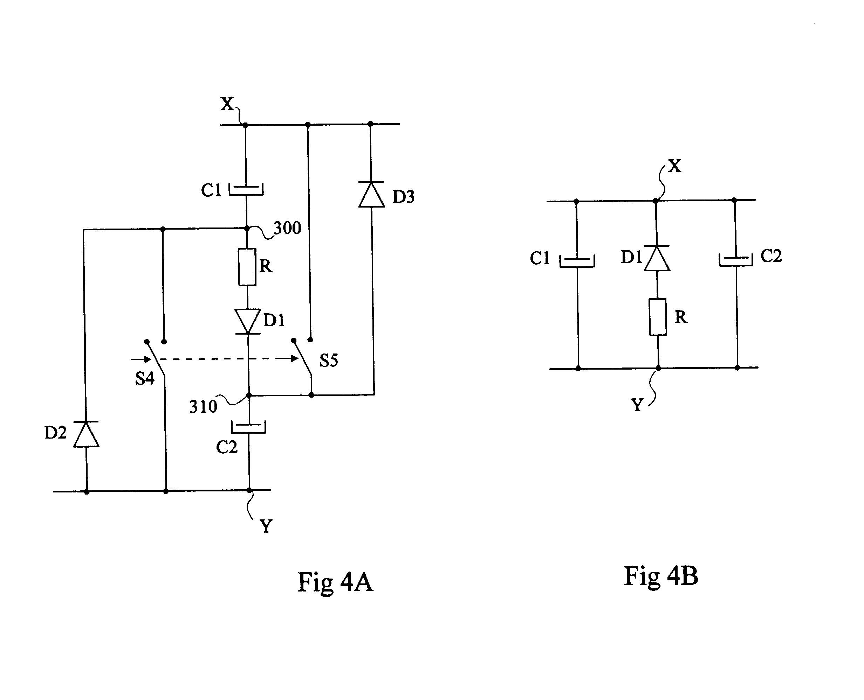

Ainsi, un mode de réalisation préféré de la présente invention est illustré en figure 4A. Il consiste à placer un premier commutateur S4 entre la borne 300 et la borne Y et un deuxième commutateur S5 entre la borne X et la borne 310.

Quand les commutateurs S4 et S5 sont ouverts, le schéma de la figure 1A n'est pas modifié.

Quand les commutateurs S4 et S5 sont fermés, on obtient le circuit illustré en figure 4B, à savoir que les deux condensateurs C1 et C2 se retrouvent en parallèle. La branche D1-R a été représentée par souci d'exhaustivité, mais on notera qu'elle ne joue aucun rôle. Les deux condensateurs C1 et C2, ayant une même capacité C et étant en parallèle, leur capacité équivalente totale sera 2C. On n'a alors aucun des inconvénients exposés précédemment et l'énergie stockée dans ces condensateurs sera suffisante pour garantir un fonctionnement convenable du circuit.

Bien entendu, les commutateurs rajoutés selon la présente invention peuvent être de tout type connu. Il peut s'agir de condensateurs mécaniques, électromécaniques ou électroniques, ils peuvent être manuels ou automatiques (c'est-à-dire associés à un circuit qui détecte automatiquement si l'alimentation du secteur est une alimentation à haute tension (220-240 volts) ou une alimentation basse tension (100-117 volts)).

Bien entendu, la présente invention est susceptible de nombreuses variantes et modifications qui apparaîtront à l'homme de l'art. En particulier, l'invention s'adaptera à des circuits tels que celui de la figure 1A comportant divers perfectionnements connus, par exemple, des circuits dans lesquels certaines au moins des diverses diodes D1 à D3 sont remplacées par des diodes à avalanche.

Plus généralement la présente invention s'applique à tout circuit de fourniture d'alimentation redressée associé à un système de correction de facteur de puissance et prévoit de façon générale d'inhiber à volonté le fonctionnement du système de correction de facteur de puissance. Cette inhibition est, par exemple, mise en action, comme cela a été décrit précédemment dans le cas d'un circuit adapté à fonctionner avec une tension alternative d'entrée élevée ou avec une tension alternative d'entrée basse, dans le cas où la tension alternative d'entrée est basse.

La figure 5 représente de façon très schématique l'allure généralisée d'un circuit de fourniture d'alimentation redressée associé à un système de correction de facteur de puissance. Ce circuit comprend, aux bornes d'un pont redresseur double alternance BR, au moins un moyen de stockage C associé à un chemin de charge comprenant des premiers moyens de conduction unidirectionnelle d'une première polarité 401 et à un chemin de décharge comprenant des deuxièmes moyens de conduction unidirectionnelle d'une deuxième polarité 402.

Les chemins de charge et de décharge ont respectivement une borne d'entrée 403 et une borne de sortie 404. Les bornes 403 et 404 peuvent être connectées comme cela a été décrit précédemment à une borne X du pont redresseur BR. Toutefois d'autres connexions peuvent être prévues. Par exemple, quand la charge 110 est associée à un convertisseur à découpage, l'une ou l'autre de ces bornes peut être liée à un enroulement auxiliaire, ou à un point intermédiaire ou un point haut de l'enroulement primaire du convertisseur.

Dans une telle structure, l'invention prévoit d'associer un commutateur 403, 404 à l'un au moins des premiers et deuxièmes moyens de conduction unidirectionnelle de sorte que, quand ce ou ces commutateurs sont actionnés, le moyen de stockage soit chargé et déchargé selon la même configuration.

## Revendications

1. Circuit d'alimentation redressée bi-tension comprenant, aux bornes d'un pont redresseur double alternance (BR), au moins un moyen de stockage (C) associé à un chemin de charge comprenant des premiers moyens de conduction unidirectionnelle d'une première polarité (401) et à un chemin de décharge comprenant des deuxièmes moyens de conduction unidirectionnelle d'une deuxième polarité (402) de façon que le moyen de stockage soit chargé et déchargé de façon distincte, caractérisé en ce qu'il comprend en outre des moyens de commutation (405, 406) supprimant l'action de l'un au moins des premiers et deuxièmes moyens de conduction unidirectionnelle de sorte que le moyen de stockage soit chargé et déchargé selon la même configuration.

2. Circuit selon la revendication 1, adapté à fonctionner avec une tension alternative d'entrée élevée ou avec une tension alternative d'entrée basse, caractérisé en ce que les moyens de commutation sont actionnés quand la tension alternative d'entrée est basse.

3. Circuit d'alimentation redressée bi-tension comprenant, aux bornes d'un pont redresseur double alternance (BR), au moins deux condensateurs de stockage (C1, C2) associés à des diodes de redressement (D1, D3) de façon que les condensateurs soient chargés en série et déchargés en parallèle, caractérisé en ce qu'il comprend en outre des moyens de commutation (S1 ; S2, S3 ; S4, S5) supprimant l'action desdites diodes de sorte que les deux condensateurs soient chargés et déchargés selon la même configuration.

4. Circuit selon la revendication 3, adapté à fonctionner avec une tension alternative d'entrée élevée ou avec une tension alternative d'entrée basse, caractérisé en ce que les moyens de commutation sont actionnés quand la tension alternative d'entrée est basse.

5. Circuit selon la revendication 3, comprenant entre la borne de sortie haute (X) et la borne de sortie basse (Y) d'un redresseur double alternance, la connexion en série d'un premier condensateur (C1) dont la première borne est connectée à ladite sortie haute, d'une résistance (R), d'une première diode (D1), et d'un deuxième condensateur (C2) dont la première borne est reliée à ladite sortie basse ; une deuxième diode (D2) étant connectée entre la deuxième borne (300) du premier condensateur et la sortie basse (Y) ; une troisième diode (D3) étant connectée entre la deuxième borne (310) du deuxième condensateur et la sortie haute (X).

6. Circuit selon la revendication 5, caractérisé en ce que les moyens de commutation comprennent un commutateur (S1) connecté aux bornes de la liaison série de ladite résistance (R) et de ladite première diode (D1).

7. Circuit selon la revendication 5, caractérisé en ce que les moyens de commutation comprennent un premier commutateur (S2) connecté entre la deuxième borne (300) du premier condensateur et une borne d'alimentation alternative du pont redresseur, et un deuxième commutateur (S2) connecté entre la deuxième borne (310) du deuxième condensateur (C2) et ladite borne d'alimentation alternative redressée.

8. Circuit selon la revendication 5, caractérisé en ce que les moyens de commutation comprennent un premier commutateur (S4) connecté entre la deuxième borne (300) du premier condensateur et la sortie basse (Y) et un deuxième commutateur (S5) connecté entre la deuxième borne (310) du deuxième condensateur et la sortie haute (X).
